# EUROPEAN PATENT APPLICATION

(11) **EP 2 166 040 A1**
(43) Date of publication of application: **24.03.2010**
(21) Application number: 08016621.8
(22) Date of filing: 22.09.2008
(51) Int. Cl.: C09B 5/62, G01M 3/20, C09B 3/40, C09B 67/22, C09B 3/60, C09B 3/50

(54) **Novel lipophilic fluorescent dyes and a process for their production**

(71) Applicant: RADIANT COLOR N.V., B-3530 Houthalen (BE)
(72) Inventor: Ismael, Rami, Dr., 3530 Houthalen (BE)

(57) **Abstract**

The present invention provides lipophilic fluorescent chromophores which are suitable for use as tracer dye in lipophilic liquids, for example in leak detection applications. The lipophilic fluorescent chromophores have been provided in different shades like green, greenish-yellow, yellow, orange and red. The use of fluorescent dyes is preferred as they have a much better visibility than their conventional countertypes, especially when exposed to ultraviolet light or also better to broad spectrum lamps. The presented chromophores contains at least one substituent at least part of which extends from the planar aromatic chromophore part, the ratio of the number of atoms (no H-atoms) in the molecule forming part of non planar substituents to the number of atoms (no H-atoms) forming part of the planar aromatic chromophore structure being at least 0.75.

## Description

The present invention relates to novel lipophilic fluorescent dyes suitable for use marking and in leak detection applications, according to the preamble of the first claim.

### BACKGROUND OF THE INVENTION

The use of dyes capable colouring oils and lubricants to permit targeting leak detection applications, is well known in the art. Traditionally, oil soluble azo and anthraquinone non-fluorescent dyes and naphthalimide fluorescent dyes with branched and non-branched alkyl chains have been utilized in such applications. The known fluorescent dyes present often the disadvantage that their heat stability is insufficient, which limits their applications. In particular the lacking heat stability may present itself in the form of degradation involving clump formation, which clog circulating systems. Many of the fluorescent dyes have undesired staining properties and cause staining of their reservoirs and piping. The colour of the fluorescent dyes suitable for use in lipophilic environment is limited to green or greenish yellow fluorescent shades, which limits differentiation. Differentiation is often important due to branding, marking and taxing issues. Different companies desire to mark in a specified way their products for better recognition and fraud limitation. Further in many countries fuels utilized in agriculture vehicles have lower taxes and need for this to be marked differently.

Fluorescent dyes mostly have a rigid aromatic planar structure, which forms the basis for the good heat stability on the one hand, but limits the solubility in oils on the other hand. Especially the literature availability of chromophores with bigger planar aromatic structures for use in leak detection or oil markers, such as dinaphthoperlyene-9,18-dione and its dodecyl derivatives disclosed in US-A-5.149.453, or nephthoxanthene or solvent green 5 or dinaphtho(1,2,3-cd;1',2',3'-1m)perylenedione and its dodecyl derivative as disclosed in US4758366, is limited to those mentioned above. Besides that, with exemption of naphthalimide dyes, available lipophilic fluorescent commercial dyes have low solubility in oils and lubricants. Although these dyes may show good initial solubility in oils or lubricants, they have limited stability in time and they show a tendency to precipitate and aggregate upon storage. When used in circulating oils, like refrigeration systems, the aggregates of precipitated dye circulate through the system and risk to clog the system. Further, the presence of precipitated dye tends to decrease the fluorescence of the solution, thus reducing its effectiveness.

For tracer dyes it is important that they do not show emulsification effects. Therefore, fluorescent chromophores with ionic charges (hydrophilic centres) like Xanthene dyes disclosed in US1915965 or pyrromethene difluoroborate complexes disclosed in WO03020857, are considered less suitable. Commercially successful oil soluble fluorescent chromophores have been so far limited to Naphthalimide chromophores disclosed in US6248890 and CA2299080.

There is thus a need to fluorescent chromophores, which are available in other colours than the available green or greenish-yellow, which show a good solubility in lipophilic environment and have a sufficiently long shelf life time and show good heat stability to render them suitable for use in leak detection applications.

### SUMMARY OF THE INVENTION.

It is therefore the aim of the present invention to provide lipophilic fluorescent chromophores which are suitable for use as tracer dye in lipophilic liquids, for example in leak detection applications. It is a particular aim of this invention to provide lipophilic fluorescent chromophores which have a color that is not limited to green or greenish-yellow, but extends to orange and red and variants thereof as well. The use of fluorescent dyes is preferred as they have a much better visibility than their conventional countertypes, especially when exposed to ultraviolet light or also better to broad spectrum lamps.

This aim is achieved according to the present invention with a chromophore that contains at least one substituent at least part of which extends from the planar aromatic chromophore part, the ratio of the number of atoms (no H-atoms) in the molecule forming part of non planar substituents to the number of atoms (no H-atoms) forming part of the planar aromatic chromophore structure being at least 0.75.

Chromophores usually contain an aromatic base part which forms in addition to the Auxochromes the chromophore system and which is mainly planar. With planar aromatic chromophore part is meant the part of the molecule which extends in the plane of the aromatic chromophore base part of the molecule. This may consist exclusively of the atoms forming the chromophore base part but it may also include atoms forming part of a substituent which extend in the plane of the chromophore base part of the molecule. With non-planar substituents is meant those substituents which do not extend in the plane of the chromophore base part of the molecule, in particular those parts of the molecule which extend under an angle with respect to the planar aromatic base part of the molecule. Hereafter, the ratio of the number of atoms (no H-atoms) in the molecule forming part of non planar substituents to the number of atoms (no H-atoms) forming part of the aromatic planar structure, will be referred to as the Non Planar Substituents Atoms to Aromatic Planar Structure Atoms ratio, or the NOPSA/APSA ratio. As it is known in the art, almost all chromophores, and especially perylene chromophores are not 100% planar, here we consider all as planar and planarity in this is used as common and widely used and not as 100% planarity.

When analysing commercially available fluorescent dyes, it appears that they have a NOPSA/APSA ratio, which is lower than 0.75. Although the use of substituted perylene dyes is mentioned for oil marking or leak detection marking in previous patents, there is no teaching in the prior art that the NOPSA/APSA ratio would determine the ability of a chromophore to act as a marker in lipophilic environments.

Preferably the NOPSA/APSA ratio is between 0.75 and 13, more preferably between 1.5 and 10, most preferably between 2 and 7. If the ratio is below 0.75, solubility problems in lipophilic media will arise with related solutions stability, sedimentation upon storage and pipe clogging problems. If the ratio is above 13, than the colour strength becomes right low and sometimes clods forming problems of the substituents with intramolecular solubility behaviour will arise limiting the efficiency of the dyes.

According to a preferred embodiment, the lipophilic chromophores contain at least two, preferably at least three, more preferably multiple substituents on the planar part of the chromophore molecule.

By varying the NOPSA/APSA ratio and the number of substituents present on different chromophores, chromophores that are soluble and stable in lipophilic media with varying colours and shading may be provided. This permits providing cascading chromophore mixtures, i.e. mixtures of different tuned fluorescent shades. Thus, chromophores are provided which are suitable for use in tracing and marking of fuels, lubricants, oils, inks, paints, coatings and similar products.

Preferred fluorescent chromophores are perylene, naphthaline and rylene based chromophores, in particular their mono- or bisimide or amidine or hydrazam chromophores as those have optimum heat stability among fluorescent dyes and do not bear ionic charges. Although oil soluble substituted naphthalimides chromophores are commercially available, no other commercially available chromophores have been found which at the same time show good solubility in lipophilic media and good fluorescence. For example the alkyl chain, for example the C12 dodecyl alkyl substituent, which assists in improving the lipophilic properties of naphthalimide chromophores fails to bring bigger planar chromophores, like dinaphthperylene-9,18-dione into solution. Besides that, substituents may affect the stability and shelf life of the chromophore in the carrier medium; this means it should be heat stable and resulting chromophores should not crystallize or freeze out of the composition.

Perylene, naphthaline and rylene based chromophores are preferred over azo chromophores disclosed in W003078551, thymolphthalein or cresolphthalein based structures disclosed in US6002056 methyl violet, crystal violet, auramine B or rhodamine B based chromophores and over anthraquinone blue oil dyes as disclosed in US4369120 because of their inferior heat stability and their intense fluorescence.

Within the scope of this invention also mixtures of 2 or more of the dyes according to the invention may be used to create intermediate shades. These intermediate shades might have as advantage fluorescence cascading properties resulting in higher reflection respectively higher fluorescence intensity.

The present invention also relates to a process for preparing the above described fluorescent chromophores.

### DETAILED DESCRIPTION OF THE INVENTION.

Particularly preferred chromophores within the scope of this invention are fluorescent lipophilic perylene, naphthaline and rylene based chromophores, in particular their mono or bisanhydride, mono- or bisimide, amidine or bisamidine, imideamidine, hydrazam, bishydrazam, imidehydrazam or amdinehydrazam, lactam or imidelactam derivatives or mixtures of two or more of those or dimers or trimers or polymers of these compounds. The use of mixtures is of particular interest as it permits providing a wide variety of shades of one single colour and intensifying the fluorescence due to cascading affects.

According to a preferred embodiment of the invention, the lipophilic chromophore responds to formula IA below 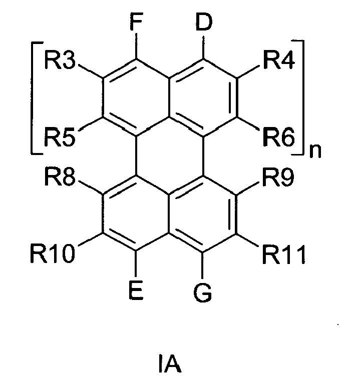 in which

n is a whole number between 0 and 10, preferably between 0 and 4, more preferably between 0 and 3. D, E, F and G may be the same or different and are independently from one another -CO-NR1-NR2, N02, NH2, H, -COO-, -CO-,- CONR1-,-NR2-, F, Cl, I, heterocycles, that connect to the chromophore at the position of F and D respectively E and G, like connection-C(=O)-N(R1)-C(=O)-connection, connection-C(=O)-N(R1)-N(R2)-connection, connection-C(=O)-N(R1)-connection, connection-C(=O)-N(aromate K)-C(=N-aromate K)-connection, connection-C(aromate K)-C(aromate K)-O-connection, connection-C(aromate K)-C(aromate K)-S-connection, connection-C(aromate K)-C(aromate K)-NH-connection. More specified examples are given in I, II, III, IV and in XIV till XXV. R1, R2, R7, R12 and R13 may be the same or different and independently of each other correspond to any alkyl, heteroalkyl, cycloalkyl, heterocycloalkyl, heteroaromate or mixtures of those. R1, R2, and R7 preferably correspond to R14 in formula V-VIII and do not contain tertiary-C atoms as direct attachment to the N atoms. 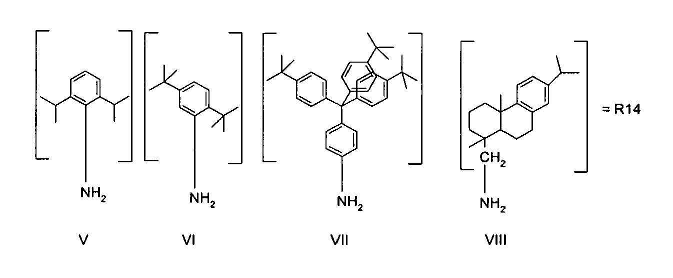 R3, R4, R5, R6, R8, R9, R10, R11 may be the same or different and are independently of each other an O-aromate or O-heteroaromate or O-alkyl or O-heteroalkyl or mixtures of those. R3, R4, R5, R6, R8, R9, R10, R11 preferably correspond to R15 according to any one of formulas IX -XIII, 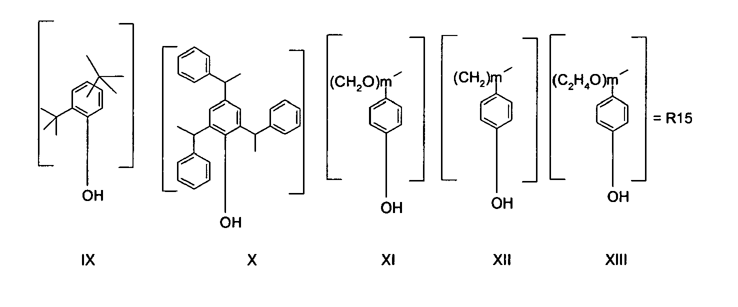 or an alcohol from the group of or 3,5-Di-tert-butylcatechol or Totarol [CAS 511-15-9] or one of the following alcohols: Dehydroabietyl alcohol [TETRADECAHYDRO-1,4A-DIMETHYL-7-(1-METHYLETHYL)-1-PHENANTHRENEMETHANOL, CAS: 13393-93-6, preferred alcohol], 1- Hexadecanol, 1-Octadecanol, 1-Pentadecanol, 1-Tridecanol, 1-Undecanol, 1- Dodecanol, 1-Nonanol, Decyl alcohol, 1-Tetradecanol, 1-Tetradecanol, 1-Eicosanol, 1-Triacontanol, Nonadecanol, 1-Heptadecanol, Tetracosanol, Tricosanol, Heneicosanol or 1-Docosanol

Practical examples of the structural formulas of these chromophores are given in the drawings of the structures I to IV and from XIV to XXV below. Particularly preferred amines for use as the H2N-R1, H2N-R2 or H2N-R7 reactant to generate formula II, IV, XIV or XVII below are given in the drawings of the structures V to VIII, where R1, R2, R7 correspond to R14. R3, R4, R5, R6, R8, R9, R10, R11 in the formula I to IV and XIV to XXV correspond preferably to R15 in IX to XIII. In the précised examples given in the formula III, IV, XV to XIX below W, Y, Z is H, halogen atom in particular F, Cl or Br, CO-OR13, X1-alkyl, X1-heteroalkyl, X1-cycloalkyl, X1-aryl, X1-heteroaryl. X respectively X1 may be the same or different and independently of each other correspond to S or O or NH. In the formula XIV, XV or XVI below, R1 respectively R2 are preferred a primary alkyl with one to 23 C-atoms.

### Naphthalimide dyes, Perylene imides, Perylenebisimides and, Reylene imides

Reaction of a molecule of formula III, in which n = 0 R8, R9, R10, R11, W are all H, and Z is Cl, with a compound of formula V-VIII, in particular VIII, results in highly interesting molecules for applications demanding good lipophilic solubility.

Another example of a particularly preferred molecule is represented by formula IV, with n= 0 and R8 = R9 = R10 = R11 = W = H, R1 = R14 (in VIII) and Z = -NH-R14 (in VIII). The thus obtained Naphthalimide dye has a NOPSA/APSA ratio of 2.5 and is substituted at 2 different positions and as a result the molecule shows high compatibility with oils and lubricants. This chromophore has a big advantage over the structures disclosed in US6248890 and CA2299080 where straight or branched alky chains are utilized which tend to form clods with intramolecular solubility behaviour reducing in this their solubility of the dye in lipophil media, as this tendency is not observed with the compound according to this invention. Clod formation is counteracted with the compounds of this invention because of R14 in V to VIII do not have the ability to roll in itself forming alkyl-ball or clod, such a behaviour is possible with linear long alkyl chains.

Also structures according to formula III or IV where W or Z or both are oxyalkyl or oxyphenyl groups are easy achievable in sufficient NOPSA/APSA ratio following the same methodology described above. The W and Z position offer additional substituent positions for further optimising the NOPSA/APSA ratio, where those are replaced (additionally to the utilisation of the right amines from structures like V, VI, VII or VIII or not) with R15 from structures like IX, X, XI, XII, XIII or mixtures of those.

Looking on the structures III or IV and setting n = 1 result in perylenemonoanhydride respectively perylenemonoimide dyes. The synthesis of such dyes are described in DE19622673, in the literature [Rami Ismael, Dissertation, 1998] and [J.Mater.Chem., 2001, 11, 1789-1799]. Especially dyes as in structure IV, where R3 = R4 = R6 = R11 = W = R10 = R8 = H and R9 = Z = R5 = Br are of interest. Those are easy accessible following the procedures mentioned in EP0804507. By causing these compounds to react with one or more compounds of formula V-VIII, in particular to have R14 from the formula VII or VIII present as substituents, perylenemonoimide dyes with optimised NOPSA/APSA ratio are obtained.

In case in formula III or IV, n is 2 or 3, quaterrylene respectively Rylenemonoimide dyes are obtained, as is described in DE19940708. By causing this compound to react with a compound according to any one of formula V-VIII or IX - XIII, dyes are obtained with optimised lipophilic solubility and with a NOPSA/APSA ratio of at least 0.75.

### Perylene dyes and their quaterrylene or Rylene derivatives.

From US-A-4758366 and US-A-6165384 one compound according to formula XXV is known, where n = 1, R3 = R4 = R5 = R6 = R8 = R9 = R10 = R11 = H, R12 = R13 = CH2CH(CH3)2 resulting in the dye 3,9-perylenediisobutylacetate, which is also known in the literature as solvent green 5. This dye has right low solubility in lipophilic media. However, the NOPSA/APSA ratio is only 0.6.

In order to obtain dyes with a NOPSA/APSA ratio of at least 0.75, solvent green 5 or its diacid precursor, where R12 = R13 = H is caused to react with one or more alcohols of formula IX, X, XI, XII or XIII or Totarol [CAS 511-15-9] or Dehydroabietyl alcohol [TETRADECAHYDRO-1,4ADIMETHYL-7-(1-METHYLETHYL)-1-PHENANTHRENEMETHANOL, CAS: 13393- 93-6, preferred alcohol] or 1-Hexadecanol, 1-Octadecanol, 1-Pentadecanol, 1-Tridecanol, 1-Undecanol, 1-Dodecanol, 1-Nonanol, Decyl alcohol, 1-Tetradecanol, 1-Tetradecanol, 1-Eicosanol, 1-Triacontanol, Nonadecanol, 1-Heptadecanol, Tetracosanol, Tricosanol, Heneicosanol or1-Docosanol or mixtures of those. Where the alkyl or the aryl-cycloalkyl-alkyl chain (as in Dehydroabietyl alcohole) replaces the R12 or R13 in the resulting structures. Al the gained chromophores have good solubility in lipophilic media like oils or lubricants, have a NOPSA/APSA ratio between 1.3 and 2.9 and are substituted at 2 different positions.

The advantage of the preferred Dehydroabietyl alcohol is again, the high solubility of the resulting molecules, without the tendency of the long alkyl chains to form clods. Similar high soluble dyes are achieved by reacting the 3,9-perylenediacide with amines as given in the structure V to VIII and especially VIII. In these cases R12 = R13 = R14 and the O atom attached to R12 or R13 is replaced with NH from the amines.

Following the same concept, the quaterrylene (n = 2) and Rylene (n = 3) derivatives might be substituted in the same manner to get dyes with interesting NOPSA/APSA ratio. Naphthalene derivatives (n = 0) are not of interest as they do not have any technical value as colorants.

### Perylene-3,4:9,10-bis-imide dyes and their quaterrylene and Rylene-bisimide homologous:

Those dyes have been often mentioned in the literature. The only known perylene molecules from the literature, which fulfil the main requirement of our invention (NOPSA/APSA ratio higher than 0.75) are among others synthesized in patent WO0192420. Anyway the molecules synthesized there are difficult to synthesise, utilized amines are achieved in right low yield and for this the dyes could not find any industrial interest. Our targeted ratio has not been mentioned in the given patent nor in others, it has neither been a target of the mentioned work, nor has it been mentioned or claimed there or in other patents.

Formula I may be considered the precursor, where
- n is 1, 2, 3 or 4 and
- R3, R4, R5, R6, R8, R9, R10, R11are independently of each other H or F or Cl or Br or NH-R.
   With n = 1, R3 = R4 = R5 = R6 = R8 = R9 = R10 = R11 = H, perylenebisanhydride chromophore is obtained, which is available on industrial scale. Reacting this chromophore with the amine VII or VIII or a mixture of those following procedures mentioned in WO0192420 results in easy achievable lipophilic dyes with sufficient NOPSA/APSA ratio of 1.3 respectively 2.5. Those molecules have structures as given in II, where n = 1, R3 = R4 = R5 = R6 = R8 = R9 = R10 = R11 = H. R1 or R2 or both = R14 from VII or VIII. The result of the reaction with amine according to formula VIII is shown additionally in structure XXIV. Further mono to tetrafluoro, -chloro or -bromo derivates of perylenebisanhydride are also available on industrial scale, especially the tetrachloro derivate. Those dyes are represented in structure I or II, where n = 1, R3 = R4 = R10 = R11 = H and 1 to 4 of the substituents R5, R6, R8 and R9 are F, Cl or Br. The synthesis of such molecules are described in [Org. Lett., Vol. 8, No. 17, 2006, 3765-3768], DE3018006 and EP0697027. Also the substitution of the Cl or Br atoms with alcohols is described in the given patents. The F, Cl or Br substituted chromophores I or II are also considered as precursors. Bisanhydrids (structure I) need first to be turned into bisimides (structure II) through reactions with primary amines (like V, VI, VII or VIII). Reacting the F, Cl or Br (or mixtures of F, Cl or Br) substituted bisimides (structure II) with alcohols following the procedures mentioned in the same patents would result in interesting dyes of the structure II, Where at least one, but better all of R5, R6, R8, R9 are equal to R15 in IX or X or long alkyl or heteroalkyl chains. Among others, best alcohols are given in the structures IX, X, XI, XII or XIII or 3,5-Di-tert-butylcatechol or Totarol [CAS 511-15-9] or one of the following alcohols: Dehydroabietyl alcohol [TETRADECAHYDRO-1,4A-DIMETHYL-7-(1-METHYLETHYL)-1- PHENANTHRENEMETHANOL, CAS: 13393-93-6, preferred alcohol], 1- Hexadecanol, 1-Octadecanol, 1-Pentadecanol, 1-Tridecanol, 1-Undecanol, 1- Dodecanol, 1-Nonanol, Decyl alcohol, 1-Tetradecanol, 1-Tetradecanol, 1-Eicosanol, 1-Triacontanol, Nonadecanol, 1-Heptadecanol, Tetracosanol, Tricosanol, Heneicosanol or 1-Docosanol or mixtures of those, where the O-alkyl or the O-aryl or the O-aryl-cycloalkyl-alkyl chain (as in Dehydroabietyl alcohol) replaces the R5, R6, R8 or R9 in the resulting structures. Mixtures of the mentioned alcohols might also be applied. In the structures IX, X, XI, XII and XIII, m in XI, XII or XIII is 0 to 34 and must be high enough in order to deliver the right NOPSA/APSA ratio. As smaller the amine moiety is, which is reacted on structure I to get structure II as bigger or longer the reacted alcohol moiety must be and visa versa. For example if we choose Amine V or VI, than Alcohol IX will not be sufficient. Neither will be alcohol XI or XIII if m < 3 or alcohol XII if m < 8. On the other hand is we choose Amine VII with alcohol XII (with m = 11), than a dye can be synthesized with optimal NOPSA/APSA ratio of 5. The resulting dye structure is given in structure XXIII.

### Naphthalenehydrazame, -amidine and Benzoxanthene dyes and their Perylene, quaterrylene and Rylene homologous:

The same approach as mentioned above has been also applied to utilizing the above mentioned methodology to Hydrazam chromophores, like Naphthalinhydrazamimide and Perylenehydrazamimide. Looking on structure XIV: Naphthalinhydrazamimide: n= 0: R1= R2 = Alkyl, R7= Alkyl, R3=R4=R5=R6= H. Those dyes have been described in patent WO0040657.

Perylenehydrazamimide: n= 1: R1, R2, R7 may be the same or different and are independently from one another alkyl or heteroalkly, R3=R4=R5=R6= H. Those dyes have been described in patent W00040657. In order to get chromophores with acceptable to optimal NOPSA/APSA ratio we modified the given structures at the aromatic core of the Naphthaline respectively the perylene aromates. Starting from the anhydride structures (structure I) where n = 1, R3 = R4 = R10 = R11 = H and R5 = R6 = R8 = R9 = Cl reacting it initially with N,N'-dimethylhydrazine, isolating the precursor and reacting it with the alcohols mentioned under IX, X, XI, XII to XIII results in the needed corresponding structures as in XIV, where R1 = R2 = CH3. and were R5 = R6 = R8 = R9 = R15 from IX, X, XI, XII to XIII.

Reacting structure I with aromatic ortho or peri diamines like o-Phenylenediamine or 4,5-Dichloro-o-phenylenediamine or 1,8-Diaminonaphthalene in the first step and utilizing the right alcohols from IX, X, XI, XII or XIII in the second step results in sufficient to optimal soluble dyes like ,but not limited to, the structures XX or XXI, where A in XX might also be utilized during the second step to increase the solubility. Utilizing 4,5-Dichloro-o-phenylenediamine as starting amine results in A = Cl in the first step of the reaction, where the 4 Cl atoms are removed at once with the core Cl atoms (a precursor of XX would be n= 1, R3 = R4 = R10 = R11 = H, A = R5 = R6 = R8 = R9 = Cl) utilizing the alcohols in the second reaction step result in the right dyes (in the given example, in XX: n= 1, R3 = R4 = R10 = R11 = H, A = R5 = R6 = R8 = R9 = R15 from IX, X, XI, XII or XIII).

Applying the same methodologies on structures like XXII, where precursors are available on industrial scale (n= 0), results in tracer dyes as given in the structures XV, XVI, XVII or XVIII with sufficient to optimal NOPSA/APSA ratio, where the halogen atoms are replaced with R15 from IX, X, XI, XII or XIII.

### Structures of selected vat dyes XXVI.

We have carried also different reactions on Vat dyes as given in structures XXVI, where we replaced the halogen atoms with aromatic alcohols. We have not chosen any vat dye with only one halogen substituents as the resulting dyes would not fulfil our requirements regarding the right NOPSA/APSA ratio and in this the right solubility. Work can be found in this regard (as in patent US5149453), which does result in useless dyes for marking lipophilic media as oils and lubricants. A wide range of alcohols might again be used. The resulting structure of reacting Vat Orange 4 with Totarol [CAS 511-15-9] is given in structure XXVII.

| | | |
|---|---|---|
| 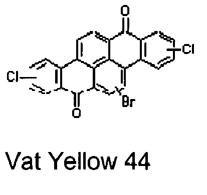 | 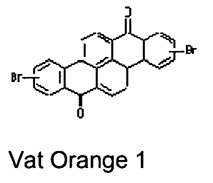 | 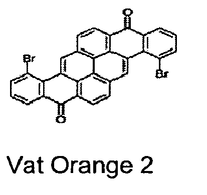 |
| 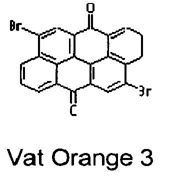 | 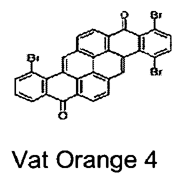 | 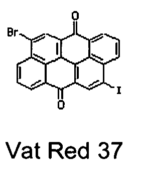 |
| 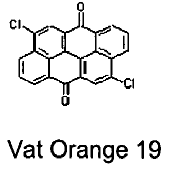 | 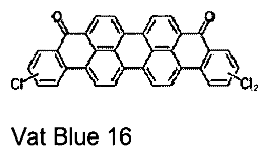 | 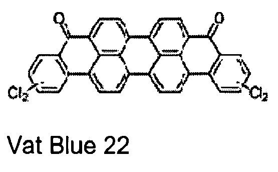 |
| Structures of selected vat dyes XXVI | | |

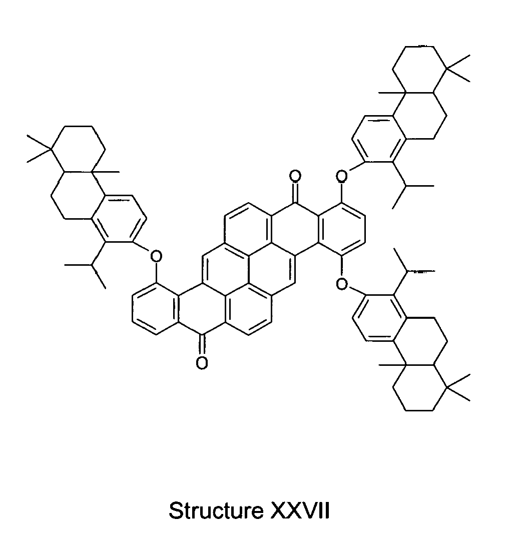

### Cascading and fluorescent dyes mixtures:

Within the scope of this invention it is also possible to use a mixture of 2 or more dyes to create intermediate shades.

For example, the molecule present in structure IV, where n= 0 and R8 = R9 = R10 = R11 = W = H, R1 = R14 (in VIII) and Z = -NH-R14 (in VIII) shows green fluorescence. It absorbs mostly in the UV and blue light spectral area. The dye XXIV shows orange fluorescence, it absorbs mostly in the green and yellow light spectral area. The dye XXIII shows red fluorescence, it absorbs mostly in the yellow to orange area. Mixing all three dyes or 2 of them would result in cascading between the dyes, where the dye with the longer wave length absorption and emission (fluorescence) would absorb some of the shorter wavelength emission of the other dyes in the mixture giving more intense fluorescence of intermediate shades. The shade of intermediate color would depend on the ratio of each dye in the mixture.

The present invention also relates to a process for preparing a chromophore composition, which is characterized in that a composition is made by mixing two or more of the above described chromophores.

The present invention also relates to the use of the fluorescent lipophilic chromophore described above or a chromophore composition containing two or more of the above described chromophores in a mixture with at least one oil, wax, fatty acid, long tail acid esters, lubricant, refrigerant system, transmission fluid, hydraulic fluid or lipophilic medium as a tracer.

The present invention further relates to a composition containing the fluorescent lipophilic chromophore as described above or the chromophore composition described above and a compound or a mixture of two or more compounds selected from the group of alkylated benzenes, alkyl naphthalenes, naphthenic oils, paraffinic oils, silicones, polyglycols, diesters or triesters of dicarboxylic or tricarboxylic acids, and polyalkyl silicate oils, mineral oil, polyglycols such as polyalkylene glycols, polyoxyalkylene glycols and etherfied or polyol adducts thereof; esters such as polyol esters, dibasic acid esters, and polyesters; polyether polyols; polyvinyl ethers, polycarbonates; fluorinated silicones such as fluorinated polysiloxanes; perfluoroethers; and aromatic compounds with fluoroalkyloxy or fluoroalkylthio substituents. These oils are described in the following U.S. Pat. and in the references cited therein: 5,447,647, 5,512,198, 5,486,302, 5,616,812, 5,565,129, 5,378,385, and 5,547,593. Specific oils include polyethylene glycol esters such as RETRO 100 (which is a blend of polyethylene glycol esters) sold by Castrol Industrial North America, Inc., motor oils, gear oils, synthetic oils, and polyalphaolefins, but not limited to those and the chromophores of the present invention are added as a tracer to permit identifying the presence of the oil.

The amount of chromophore used in the composition of this invention is not critical and may vary within wide ranges. Usually however, the concentration of the chromophore or chromophore composition will be below 20 wt. %, preferably smaller than 1 wt. %, more preferably smaller than 0.01 wt. %, most preferably about 0.005 wt. %.

The chromophore and chromophore composition of this invention is suitable for use in a wide range of applications such as in a mixture with at least one oil, wax, fatty acid, lubricant, refrigerant system, transmission fluid, hydraulic fluid or lipophilic medium as a tracer.

The chromophore and chromophore composition of this invention is suitable for use in leak detection, leak marking or leak monitoring applications in gaskets, compressors, fluid systems or indicators.

The chromophore and chromophore composition of this invention is also suitable for use as colorant for polymers, for electronic coatings, as colorant for the preparation of paint, in particular automotive lacquers, coating compositions, paper colours, printing inks, inks, in particular for use in ink-jet printers, for painting and writing purposes, as well as in electro photography, e. g. for dry copier systems (Xerox process) and laser printers, for security marking purposes, as additive to colorants, such as pigments and dyes, where a specific colour shade is to be achieved, for marking objects for machine recognition of these objects via the fluorescence, for converting the frequency of light, for the production of passive display elements for a multitude of display, notice and marking purposes, as starting material for Supra-conducting organic materials, for marking with fluorescence in the solid state, for decorative and artistic purposes, for tracer purposes, as fluorescent dyes in highly sensitive detection processes, as dyes or fluorescent dyes in optical light collection systems, in fluorescence solar collectors, in fluorescence-activated displays, including light sources used for light-induced polymerisation for the preparation of plastics, for testing materials, in photoconductors, in photographic processes, in display, illumination or image converter systems, as part of an integrated semiconductor circuit containing dyes as such or in combination with other semiconductors, in chemiluminescence systems or tubes or devices, in luminescence immunoassays or other luminescence detection processes, as signal paints, in dye lasers, as optical recording media, for spectral hole burning, in zeolite cages, in protein-colorant combinations, in antibody-colorant combinations, for colouring DNA or RNA, in fluorescence quantum counters, as rheology improvers and for use in single-molecule-spectroscopy.

The chromophore and chromophore composition of this invention is further suitable for use in marking or tracing or monitoring applications or systems or their parts, independent of the recognition way (naked eye, analytically, mechanically, automatically, etc.).

### EXAMPLE 1

A fluorescent orange chromophore (orange is the colour of fluorescence) was synthesized by reacting 1 gram of perylenetetrachlorobisanhydride (structure I, n = 1, R3 = R4 = R10 = R11 = H, R5 = R6 = R8 = R9= Cl) with 2.25 g of amine VII in 1000 g of Propionic acid at 140 °C for 48 hours. The mixture was cooled down over night to 25 °C to isolate the precipitated dye by filtration. The dye was washed twice with hot water (70 °C), 50 ml each. After drying at 100 °C over night a yield of 3.1 g has been isolated. This crude dye (structure II, n = 1, R3 = R4 = R10 = R11 = H, R5 = R6 = R8 = R9= Cl) might be used as such in the next step or cleaned by column chromatography (Silica gel, CH2Cl2 / EtOH : 9.8/0.2). The crude dye or its cleaned version might be used to colour lipophilic systems and especially fluid lipophilic systems.

### EXAMPLE 2

2 g of the crude gained dye from Example 1 have been reacted with 1.57 g of XII (dodecylphenol) and 2 g of sodium carbonate in 1500 ml NMP at 180 °C for 3 hours. The mixture has been cooled down to 95 °C and further after addition of 1500 ml water to 25 °C. This crude dye (3.1 g, structure XXIII) might be used as such or cleaned by column chromatography (Silica gel, CH2Cl2). The crude dye or its cleaned version might be used to colour lipophilic systems and especially fluid lipophilic systems.

### EXAMPLE 3

A fluorescent yellow chromophore (yellow is the colour of fluorescence) was synthesized by reacting 10 grams of 4-Chrloro-naphthalic anhydride (structure III, n = 0, R8 = R9 = R10 = R11 = W = H, Z = Cl). With 22 g Dehydroabietyl amine (structure VIII) in 2500 ml NMP at 180 °C for 48 hours. The mixture has been cooled down to 95 °C and further after addition of 2500 ml water to 25 °C. This crude dye (23.5 g, structure IV, n= 0, R8 = R9 = R10 = R11 = W = H, R1 = R14 (in VIII). Further Z = -NH-R14 (in VIII)) might be used as such or cleaned by column chromatography (Silica gel, CH2Cl2). The crude dye or its cleaned version might be used to colour lipophilic systems and especially fluid lipophilic systems.

### EXAMPLE 3

A fluorescent red chromophore (red is the colour of fluorescence) was synthesized by reacting 1 grams of perylenetetrachlorobisanhydride (structure I, n = 1, R3 = R4 = R10 = R11 = H, R5 = R6 = R8 = R9= Cl) with 1.25 g of amine VII and 0.25 g of N,N'-Dimethylhydrazine in 1000 g of Propionic acid at 140 °C for 48 hours. The mixture was cooled down over night to 25 °C to isolate the precipitated dye by filtration. The dye was washed twice with hot water (70 °C), 50 ml each. After drying at 100 °C over night a yield of 2.7 g has been isolated. This crude mixture of dyes (include mainly structure XIV, n = 1, R1 = R2 = CH3, R3 = R4 = R10 = R11 = H, R5 = R6 = R8 = R9= Cl, R7 = R14 from VII) has been separated and cleaned by column chromatography (Silica gel, CH2Cl2).

### EXAMPLE 4

2 g of the purified dye XIV from Example 3 has been reacted with 1.53 g of XII (dodecylphenol) and 2 g of sodium carbonate in 500 ml NMP at 180 °C for 3 hours. The mixture has been cooled down to 95 °C and further after addition of 500 ml water to 25 °C. This crude dye (3.2 g of structure XIV,wheren=1,R1=R2=CH3,R3=R4=R10=R11=H,R5=R6=R8=R9= R15 from XII as its m=11, R7 = R14 from VII) might be used as such or cleaned by column chromatography (Silica gel, CH2Cl2). The crude dye or its cleaned version might be used to colour lipophilic systems and especially fluid lipophilic systems.

### EXAMPLE 5

A fluorescent orange chromophore (orange is the colour of fluorescence) was synthesized by reacting 1 grams of perylenebisanhydride (structure I, n = 1, R3 = R4 = R10 = R11 = H = R5 = R6 = R8 = R9) with 1.75 g of amine VIII in 1000 g of NMP at 180 °C for 48 hours. The mixture was cooled down over night to 25 °C and via addition of 1000 ml of water to isolate the precipitated dye by filtration. The dye was washed twice with hot water (70 °C), 50 ml each. After drying at 100 °C over night a yield of 2.3 g has been isolated. This crude mixture of dye XXIV might be used as such or cleaned by column chromatography (Silica gel, CH2Cl2). The crude dye or its cleaned version might be used to colour lipophilic systems and especially fluid lipophilic systems.

### EXAMPLE 6

A fluorescent Yellow chromophore (yellow is the color of fluorescence) was synthesized by reacting 1 gram of XXII (n = 0, R10 = R11 = R8 = R9= H) with 1.5 g of amine VIII in 1000 g of NMP at 180 °C for 48 hours. The mixture was cooled down over night to 25 °C and via addition of 1000 ml of water to isolate the precipitated dye by filtration. The dye was washed twice with hot water (70 °C), 50 ml each. After drying at 100 °C over night a yield of 2.3 g has been isolated. This crude dye (structure XVII, n = 0, R10 = R11 = H = R8 = R9, R1 = R14 from VIII) might be used as such or cleaned by column chromatography (Silica gel, CH2Cl2). The crude dye or its cleaned version might be used to colour lipophilic systems and especially fluid lipophilic systems.

### EXAMPLE 7

A fluorescent red chromophore (red is the colour of fluorescence) was synthesized by reacting 1 gram of perylenetetrachlorobisanhydride (structure I, n = 1, R3 = R4 = R10 = R11 = H, R5 = R6 = R8 = R9= Cl) with 1.5 g of 4,5-Dichloro-o-phenylenediamine in 1000 g of Propionic acid at 140 °C for 48 hours. The mixture was cooled down over night to 25 °C to isolate the precipitated dye by filtration. The dye was washed twice with hot water (70 °C), 50 ml each. After drying at 100 °C over night a yield of 2.2 g has been isolated. This crude dye (structure XX, n = 1, R3 = R4 = R10 = R11 = H, R5 = R6 = R8 = R9= A = Cl) might be used as such in the next step or cleaned by column chromatography (Silica gel, CH2Cl2).

### EXAMPLE 8

2 g of the crude gained dye from Example 7 have been reacted with 2.5 g of XII (dodecylphenol) and 2 g of sodium carbonate in 1300 ml NMP at 180 °C for 3 hours. The mixture has been cooled down to 95 °C and further after addition of 1300 ml water to 25 °C. This crude dye (3.3 g, structure XX, n = 1, R3 = R4 = R10 = R11 = H, R5 = R6 = R8 = R9= A = R14 from XII, where its m = 11) might be used as such or cleaned by column chromatography (Silica gel, CH2Cl2). The crude dye or its cleaned version might be used to colour lipophilic systems and especially fluid lipophilic systems.

### EXAMPLE 9

1 g of Vat Orange 4 (structure given among others under XXVI) has been reacted with 3.2 g of Totarol [CAS 511-15-9] and 2 g of sodium carbonate in 1500 ml NMP at 180 °C for 8 hours. The mixture has been cooled down to 95 °C and further after addition of 1500 ml water to 25 °C. This crude dye (See Structure XXVII) might be used as such or cleaned by column chromatography (Silica gel, CH2Cl2). The crude dye or its cleaned version might be used to colour lipophilic systems and especially fluid lipophilic systems.

## Claims

1. A fluorescent lipohilic chromophore containing a at least one substituent at least part of which extends from the planar aromatic chromophore part, the ratio of the number of atoms (no H-atoms) in the molecule forming part of non planar substituents to the number of atoms (no H-atoms) forming part of the planar aromatic chromophore structure being at least 0.75. As it is known in the art, almost all chromophores, and especially perylene chromophores are not 100% planar, here we consider all as planar and planarity in this is used as common and widely used and not as 100% planarity.

2. A fluorescent lipophilic chromophore according to claim 1, **characterized in that** the ratio of the number of atoms (no H-atoms) in the molecule forming part of non planar substituents to the number of atoms (no H-atoms) forming part of the planar aromatic chromophore structure is between 0.75 and 13, preferably between 1.5 and 10 and most preferably between 2 and 7.

3. A fluorescent lipophilic chromophore according to claim 1 or 2, **characterized in that** the lipophilic chromophore responds to formula IA below 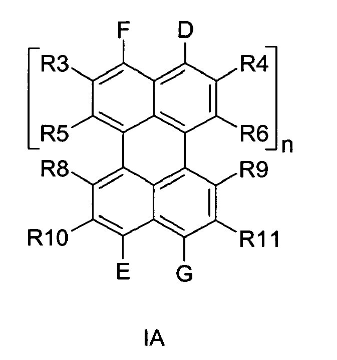 in which n is a whole number between 0 and 10, preferably between 0 and 4, more preferably between 0 and 3. D, E, F and G may be the same or different and are independently from one another -CO-NR1-NR2, N02, NH2, H, -COO-, -CO-,- CONR1-,-NR2-, F, Cl, I, heterocycles, that connect to the chromophore at the position of F and D respectively E and G, like connection-C(=O)-N(R1)-C(=O)-connection, connection-C(=O)-N(R1)-N(R2)-connection, connection-C(=O)-N(R1)-connection, connection-C(=O)-N(aromate K)-C(=N-aromate K)-connection, connection-C(aromate K)-C(aromate K)-O-connection, connection-C(aromate K)-C(aromate K)-S-connection, connection-C(aromate K)-C(aromate K)-NH-connection. More specified examples are given in I, II, III, IV and in XIV till XXV.

4. A fluorescent lipophilic chromophore according to claim 1 or 2, **characterized in that** the lipophilic chromophore responds to one of the formulas XXVII-A to XXVII-D below

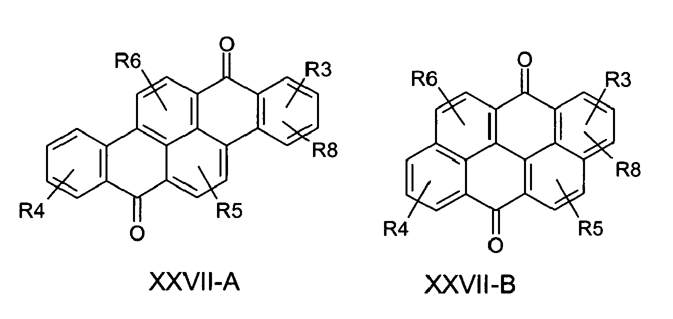

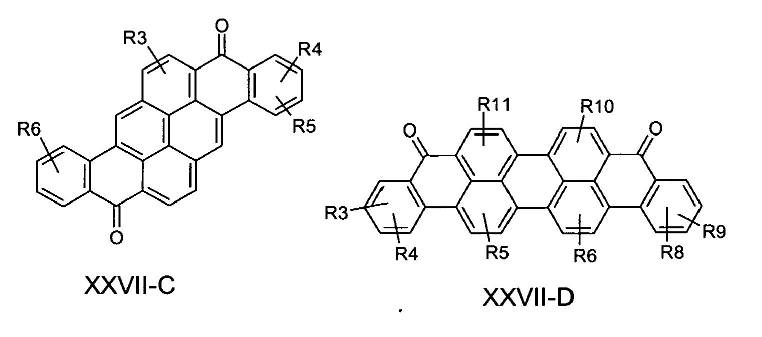

5. A fluorescent lipophilic chromophore according to claim 3, **characterized in that** R1, R2, R7 and R13 may be the same or different and independently of each other correspond to any alkyl, heteroalkyl, cycloalkyl, heterocycloalkyl, heteroaromate or mixtures of those. R1, R2, and R7 preferably correspond to R14 in formula V-VIII and do not contain tertiary-C atoms as direct attachment to the N atoms.

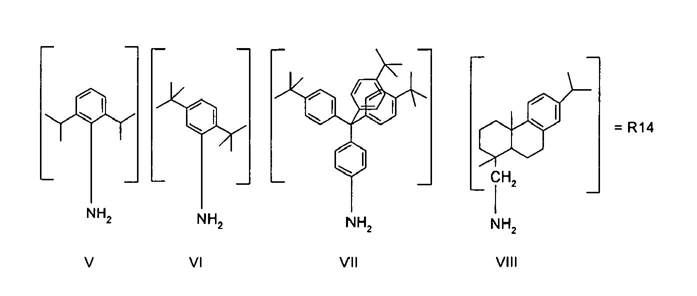

6. A fluorescent lipophilic chromophore according to claim 3 or 4 or 5, **characterized in that** R3, R4, R5, R6, R8, R9, R10, R11 may be the same or different and are independently of each other an O-aromate, O-heteroaromate, O-alkyl, O-heteroalkyl or mixtures of those. R3, R4, R5, R6, R8, R9, R10, R11 preferably correspond to R15 according to any one of formulas IX - XIII, 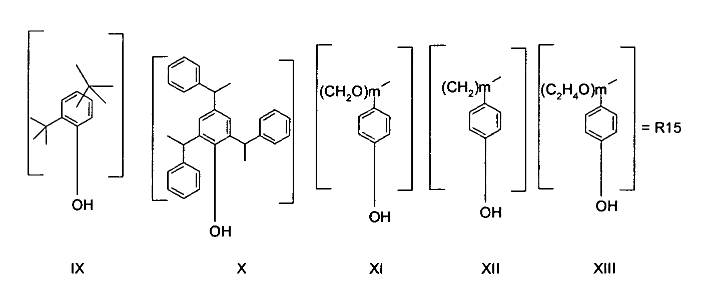 or an alcohol from the group of or 3,5-Di-tert-butylcatechol or Totarol [CAS 511-15-9] or one of the following alcohols: Dehydroabietyl alcohol [TETRADECAHYDRO-1,4A-DIMETHYL-7-(1-METHYLETHYL)-1-PHENANTHRENEMETHANOL, CAS: 13393-93-6, preferred alcohol], 1- Hexadecanol, 1-Octadecanol, 1-Pentadecanol, 1-Tridecanol, 1-Undecanol, 1- Dodecanol, 1-Nonanol, Decyl alcohol, 1-Tetradecanol, 1-Tetradecanol, 1-Eicosanol, 1-Triacontanol, Nonadecanol, 1-Heptadecanol, Tetracosanol, Tricosanol, Heneicosanol or 1-Docosanol or an alcohol from the group of or 3,5-Di-tert-butylcatechol or Totarol [CAS 511-15-9] or one of the following alcohols: Dehydroabietyl alcohol [TETRADECAHYDRO-1,4A-DIMETHYL-7-(1-METHYLETHYL)-1-PHENANTHRENEMETHANOL, CAS: 13393-93-6, preferred alcohol], 1- Hexadecanol, 1-Octadecanol, 1-Pentadecanol, 1-Tridecanol, 1-Undecanol, 1- Dodecanol, 1-Nonanol, Decyl alcohol, 1-Tetradecanol, 1-Tetradecanol, 1-Eicosanol, 1-Triacontanol, Nonadecanol, 1-Heptadecanol, Tetracosanol, Tricosanol, Heneicosanol or 1-Docosanol

7. A fluorescent lipophilic chromophore according to claim 3 or 5 or 6, **characterized in that** the lipophilic chromophore responds to any one of formula I, II, III, IV, XIV to XXV below 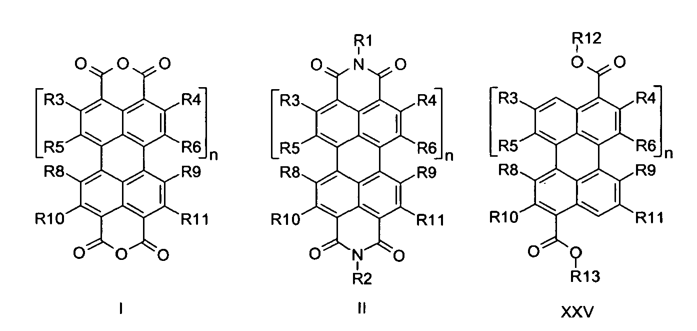 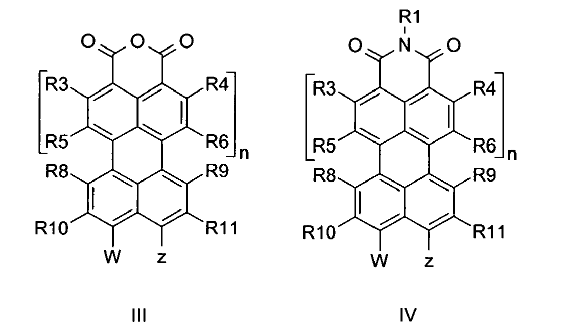 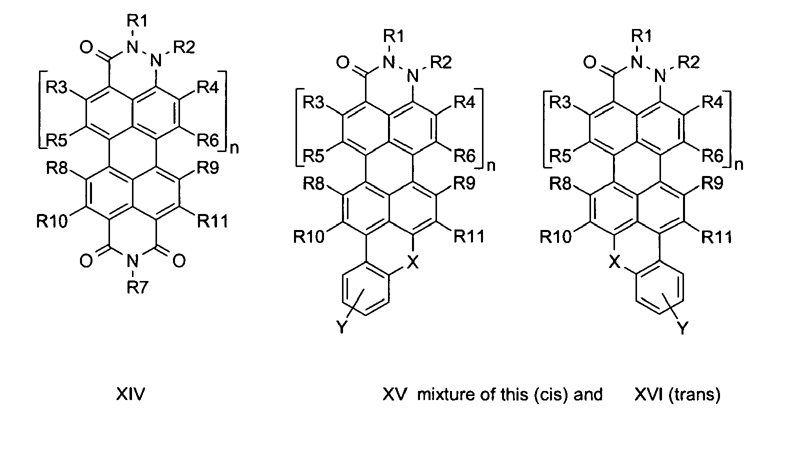 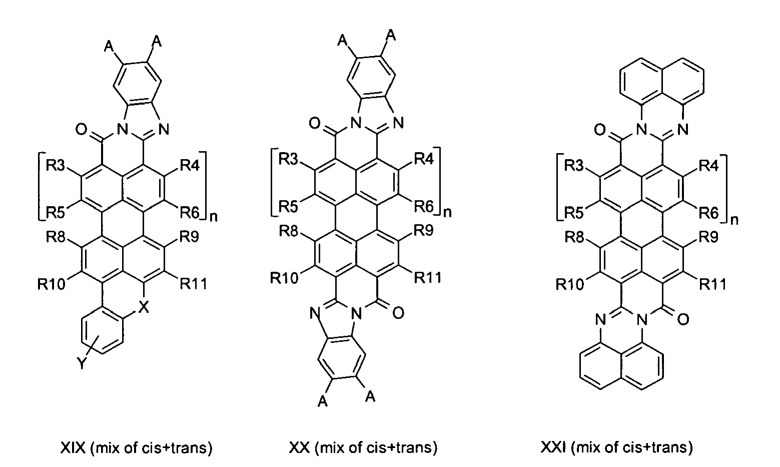 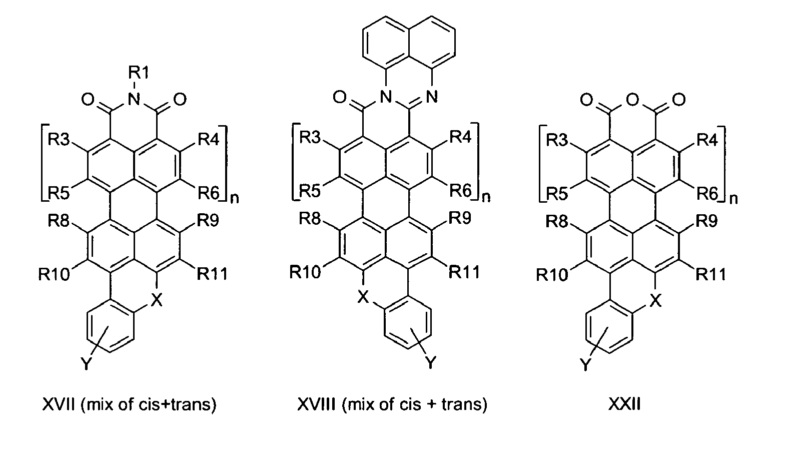 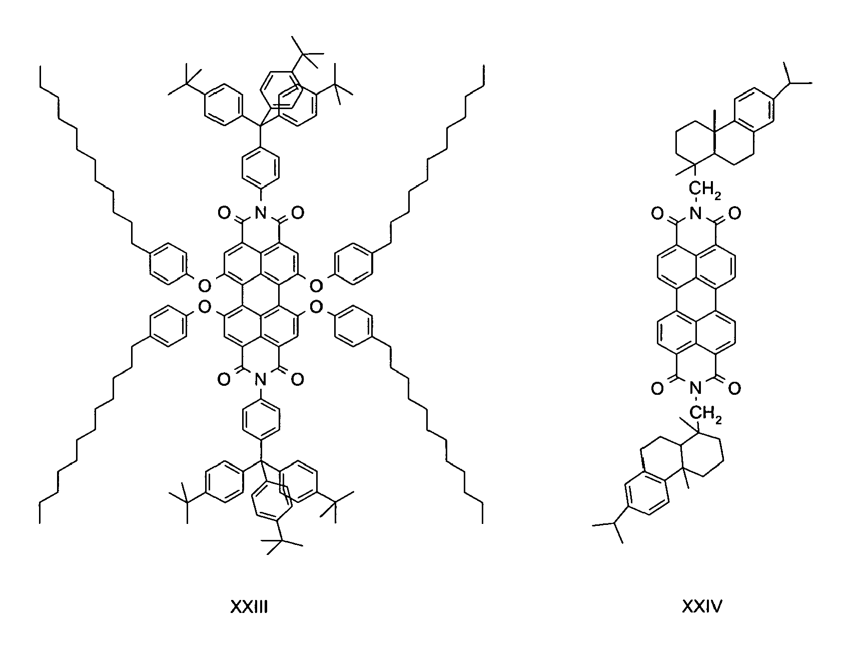 wherein R1, R2, R7, R12 and R13 may be the same or different and are an alkyl respectively heteroalkyl chain, better branched alkyl respectively heteroalkyl chain containing at least 4 carbon atoms or heteroatoms, which may be substituted or not.

8. A fluorescent lipophilic chromophore according to any one of claims 1-7 (excluding claim 4), **characterized in that** n is a whole number which corresponds to 0, 1, 2 or 3.

9. A fluorescent lipophilic chromophore composition, **characterized in that** the composition contains a mixture of two or more compounds according to any one of claims 1-8.

10. A fluorescent lipophilic chromophore composition containing at least one compound or a mixture of two or more compounds according to any one of claims 1-8 and at least one dye selected from the group of xanthene, perylene, naphthalene, naphthalimide, rhodamine, multiple ring, monocyclic aromatic compounds having an organometallic compound, or polycyclic aromatic compounds.

11. A composition containing the fluorescent lipophilic chromophore according to any one of claims 1-8 or the chromophore composition of claim 9 or 10 and a compound or a mixture of two or more compounds selected from the group of alkylated benzenes, alkyl naphthalenes, naphthenic oils, paraffinic oils, silicones, polyglycols, diesters or triesters of dicarboxylic or tricarboxylic acids, and polyalkyl silicate oils, mineral oil, polyglycols such as polyalkylene glycols, polyoxyalkylene glycols and etherfied or polyol adducts thereof; esters such as polyol esters, dibasic acid esters, and polyesters; polyether polyols; polyvinyl ethers, polycarbonates; fluorinated silicones such as fluorinated polysiloxanes; perfluoroethers; and aromatic compounds with fluoroalkyloxy or fluoroalkylthio substituents.

12. A composition according to claim 10, **characterized in that** the composition contains an amount of the chromophore according to any one of claims 1-8 or the chromophore composition of any one of claims 9-11 in a concentration below 20 wt. %, preferably smaller than 1 wt. %, more preferably smaller than 0.01 wt. %, most preferably about 0.005 wt. %.

13. Use of the fluorescent lipophilic chromophore according to any one of claims 1-8 or the chromophore composition of any one of claims 9-11 in a mixture with at least one oil, wax, fatty acid, lubricant, refrigerant system, transmission fluid, hydraulic fluid, fuel or lipophilic medium as a tracer.

14. The use of the chromophore according to any one of claims 1-8 or the chromophore composition of any one of claims 9-11 in leak detection, leak marking or leak monitoring applications in gaskets, compressors, fluid systems or indicators.

15. Use of the chromophore according to any one of claims 1-8 or the chromophore composition of any one of claims 9-11 as colorant for polymers, for electronic coatings, as colorant for the preparation of paint, in particular automotive lacquers, coating compositions, paper colours, printing inks, inks, in particular for use in ink-jet printers, for security marking purposes, for branding, marking, fraud limitation or taxing purposes, as an additive to colorants, such as pigments and dyes, where a specific colour shade is to be achieved, for marking objects for machine recognition of these objects via the fluorescence, for converting the frequency of light, for the production of passive display elements for a multitude of display, notice and marking purposes, as starting material for supra- conducting organic materials, for marking with fluorescence in the solid state, for decorative and artistic purposes, for tracer purposes, as fluorescent dyes in highly sensitive detection processes, as dyes or fluorescent dyes in optical light collection systems, in fluorescence solar collectors, in fluorescence-activated displays, including light sources used for light-induced polymerisation for the preparation of plastics, for testing materials, in photoconductors, in photographic processes, in display, illumination or image converter systems, as part of an integrated semiconductor circuit containing dyes as such or in combination with other semiconductors, in chemiluminescence systems, in luminescence immunoassays or other luminescence detection processes, as signal paints, in dye lasers, as optical recording media, for spectral hole burning, in zeolite cages, in protein-colorant combinations, in antibody-colorant combinations, for colouring DNA or RNA, in fluorescence quantum counters, as rheology improvers and for use in single-molecule-spectroscopy.
